(19)

Europäisches
Patentamt
European
Patent Office
Office européen
des brevets

(11) **EP 2 520 467 A1**

(12) **EUROPEAN PATENT APPLICATION**
published in accordance with Art. 153(4) EPC

(43) Date of publication:
**07.11.2012 Bulletin 2012/45**

(21) Application number: **10840793.3**

(22) Date of filing: **17.06.2010**

(51) Int Cl.:
***B60R 16/02*** *(2006.01)*     ***H02G 3/30*** *(2006.01)*
***H02G 11/00*** *(2006.01)*

(86) International application number:
**PCT/JP2010/060270**

(87) International publication number:
**WO 2011/080934 (07.07.2011 Gazette 2011/27)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **28.12.2009 JP 2009297816**

(71) Applicant: **Sumitomo Wiring Systems, Ltd.
Yokkaichi-shi, Mie 510-0058 (JP)**

(72) Inventors:
• **KIDA Yuuji
Yokkaichi-shi
Mie 510-0058 (JP)**
• **TANIGUCHI Hiroyasu
Yokkaichi-shi
Mie 510-0058 (JP)**

(74) Representative: **Müller-Boré & Partner
Patentanwälte
Grafinger Straße 2
81671 München (DE)**

(54) **POWER FEEDING APPARATUS AND FIXING STRUCTURE**

(57)     A feeding apparatus comprising: an elastic protection tube; multiple wires to be arranged within the protection tube; and a fixing structure for fixing the protection tube, wherein: the fixing structure includes: a pair of blocks; and a pair of holding portions; each of the pair of holding portions holds corresponding one of the blocks removably; each of the pair of blocks includes one side surface having a groove extending along a first direction, whereby the protection tube is fixed by the fixing structure when the respective blocks are held by their corresponding holding portions and the protection tube is sandwiched between the respective grooves.

FIG. 13

EP 2 520 467 A1

**Description**

TECHNICAL FIELD

The present invention relates to a feeding apparatus for feeding electric power to electric parts equipped in a slide door, and a fixing structure for use in such feeding apparatus.

BACKGROUND ART

Conventionally, there is known a technology which uses an outer tube for protecting a wire harness for a slide door and fixes such outer tube with a clamp (for example, the patent document 1). And, there is also known conventionally a technology which uses a corrugated tube with multiple wires inserted inside therein and holds such corrugated tube on the main body of a fixing tool in such a manner that it can be rotated in the peripheral direction (for example, the patent document 2).

PRIOR ART DOCUMENTS

PATENT DOCUMENTS

    Patent Document 1: JP-A-2001-224118
    Patent Document 2: JP-A-2002-199558

SUMMARY OF THE INVENTION

PROBLEMS TO BE SOLVED BY THE INVENTION

Here, the diameter size of the outer tube or corrugated tube (which is also referred to as a tube simply) is selected according to the number of wires to be arranged within the tube. For example, as the number of electric parts to be equipped in the slide door increases, the number of wires to be arranged within a tube for feeding electricity to the slide door increases, resulting in the increased size of the tube to be selected. Thus, the proper diameter side of the tube is selected according to the number of wires to be arranged within the tube.
However, the outer tube fixing method of the patent document 1 and the corrugated tube holding method of the patent document 2 are unable to cope with tubes of various different diameters. For example, the method of the patent document 1 needs staples respectively corresponding to such various tube diameters, and the method of the patent document 2 needs fixing tools respectively corresponding to such various tube diameters.
Therefore, when there are used tubes of multiple diameter sizes, the feeding apparatus manufacturing cost disadvantageously increases.
Thus, it is an object of the invention to provide a fixing structure capable of fixing a protection tube properly and a feeding apparatus using such fixing structure.

MEANS FOR SOLVING THE PROBLEMS

In attaining the above object, according to a first embodiment of the invention, there is provided a feeding apparatus which includes an elastic protection tube, multiple wires to be arranged within the protection tube and, a fixing structure for fixing the protection tube. Specifically, the fixing structure includes a pair of blocks and a pair of holding portions. The paired holding portions respectively can hold their corresponding blocks removably, and the paired blocks respectively have such one side surface as extends along a first direction. To fix the protection tube by the fixing structure, the respective blocks may be held by their corresponding holding portions and the protection tube may be sandwiched between the respective grooves.
Also, according to a second embodiment, in a feeding apparatus of the first embodiment, the pair of blocks each includes multiple leg portions respectively extending along a second direction, each of the pair of holding portions includes multiple projecting portions disposed correspondingly to the multiple leg portions and extending along the second direction. To hold the paired blocks by the paired holding portions, the leg portions may be engaged into recesses existing between the mutually adjoining projecting portions, or the respective leg portions and their corresponding projecting portions may be made to face each other.
According to a third embodiment, in a feeding apparatus of the first or second embodiment, the surface of the groove formed in the one side surface is a substantially arc-shaped surface capable of fixing the protection tube having a substantially cylindrical shape.

According to a fourth embodiment, in a feeding apparatus of the first or second embodiment, the shape of the groove formed in the one side surface is a substantially prismatic shape capable of fixing the protection tube having a substantially prismatic shape.

Also, according to a fifth embodiment, there is provided a fixing structure for fixing an elastic protection tube, comprising: a pair of blocks; and, a pair of holding portions. The paired holding portions respectively can hold their corresponding blocks removably, and the paired blocks respectively include one side surface having a groove extending along a first direction. To fix the protection tube, the respective blocks may be held by their corresponding holding portions and the protection tube may be sandwiched between the respective grooves.

According to a sixth embodiment, in a fixing structure of the fifth embodiment, each of the paired blocks includes multiple leg portions respectively extending along a second direction, and each of the paired holding portions includes multiple projecting portions disposed correspondingly to the multiple leg portions and extending along the second direction. And, to hold the paired blocks by the paired holding portions, the leg portions may be engaged into recesses existing between the mutually adjoining projecting portions, or the respective leg portions and their corresponding projecting portions may be made to face each other.

According to a seventh embodiment, in a fixing structure of the fifth or sixth embodiment, the surface of the groove formed in the one side surface is a substantially arc-shaped surface capable of fixing the protection tube having a substantially cylindrical shape.

According to an eighth embodiment, in a fixing structure of the fifth or sixth embodiment, the shape of the groove formed in the one side surface is a substantially prismatic shape capable of fixing the protection tube having a substantially prismatic shape.

EFFECTS OF THE INVENTION

According to a feeding apparatus of the first embodiment and a fixing structure of the second embodiment, the paired blocks can be removably held by their corresponding holding portions. Therefore, without changing the structure of the paired holding portions, simply by selecting a block corresponding to the size (width direction size) of the protection tube, protection tubes of various sizes can be fixed. This can reduce the cost necessary to manufacture the feeding apparatus and fixing structure capable of coping with protection tubes of various sizes.

According to a feeding apparatus of the second embodiment and a fixing structure of the sixth embodiment, by selecting the position relationship between the holding portions and blocks, various distances can be selected between the grooves. Therefore, without replacing the pair of blocks, the fixing structure is allowed to cope with multiple protection tubes of different sizes (width direction sizes). This can further reduce the cost necessary to manufacture the fixing structure and feeding apparatus capable of coping with protection tubes of various sizes.

According to a feeding apparatus of the third embodiment and a fixing structure of the seventh embodiment, a protection tube having a substantially cylindrical shape can be fixed properly.

According to a feeding apparatus of the fourth embodiment and a fixing structure of the eighth embodiment, a protection tube having a substantially prismatic shape can be fixed properly.

BRIEF DESCRIPTION OF THE DRAWINGS

Fig. 1 is a side view of an example of the whole structure of a car to which a feeding apparatus according to an embodiment of the invention is applied.
Fig. 2 is a side view of an example of a wiring structure for a slide door.
Fig. 3 is a side view of an example of a wiring structure for a slide door.
Fig. 4 is an exploded perspective view of an example of the structure of a slide door side feeding apparatus.
Fig. 5 is a plan view of an example of a main body side feeding apparatus.
Fig. 6 is a back view of an example of a main body side feeder apparatus.
Fig. 7 is a side view of an example of a main body side feeder apparatus.
Fig. 8 is a plan view of an example of the structure of a fixing portion.
Fig. 9 is a side view of an example of the structure of a block for fixing a wire protection tube.
Fig. 10 is a bottom view of an example of the structure of a block for fixing a wire protection tube.
Fig. 11 is a back view of an example of the structure of a block for fixing a wire protection tube.
Fig. 12 is a sectional bottom view when viewed from the V-V line shown in Fig. 9.
Fig. 13 is an explanatory view of a method for fixing a wire protection tube using a fixing portion.

Fig. 14 is an explanatory view of a method for fixing a wire protection tube using a fixing portion.

Fig. 15 is an explanatory view of a method for fixing a wire protection tube using a fixing portion.

Fig. 16 is an explanatory view of another method for fixing a wire protection tube using a fixing portion.

MODES FOR CARRYING OUT THE INVENTION

Now, description will be given below specifically of an embodiment of the invention with reference to the accompanying drawings.

<1. Structures of Car and Slide Door>

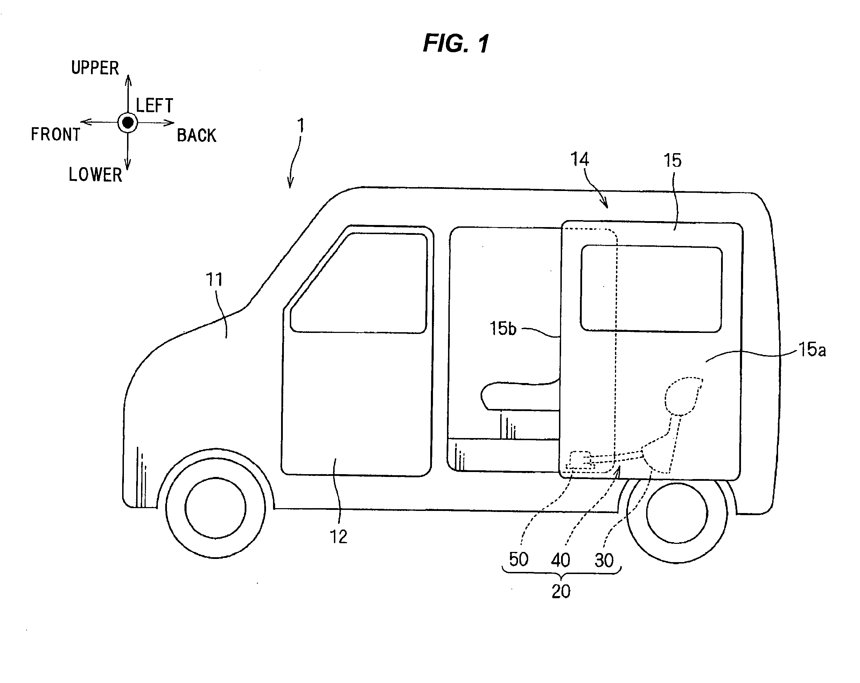

Fig. 1 is a side view of an example of the whole structure of a car 1 to which a feeding apparatus according to an embodiment of the invention is applied. The car 1, as shown in Fig. 1, includes a substantially box-shaped car body 11, a front door 12 and a slide door 14, while such car is used as a passenger car or a truck.

The front door 12 is an openable/closable door of a hinge type and the car body 11 includes two front doors 12 respectively provided on its right and left side surfaces. The slide door 14 is an openable/closable door which can be moved forward and backward along the car body 11. As shown in Fig. 1, the slide door 14 includes a slide door main body 15.

Here, in Fig. 1, the slide door 14 is provided only on the left side surface of the car body 11. However, the provision of the slide door 14 is not limited to this. For example, the slide door 14 may also be provided on one of the right and left side surfaces, or may be provided on both side surfaces. Also, as the openable/closable door of the car 1, instead of the front door 12 of a hinge type, a slide door 14 of a forward and backward movable type may also be used.

The slide door main body 15 mainly includes a metal-made outer panel 15a and a resin-made inner panel 15b. On the slide door main body 15, there are mounted electric parts (not shown), for example, a motor for driving a power window or a switch for opening and closing the power window. Also, in a space surrounded by the outer and inner panels 15a and 15b, there is provided a portion (for example, a slide door side feeding apparatus 30) of a feeding wire structure 20.

<2. Structure of Feeding Wire Structure>

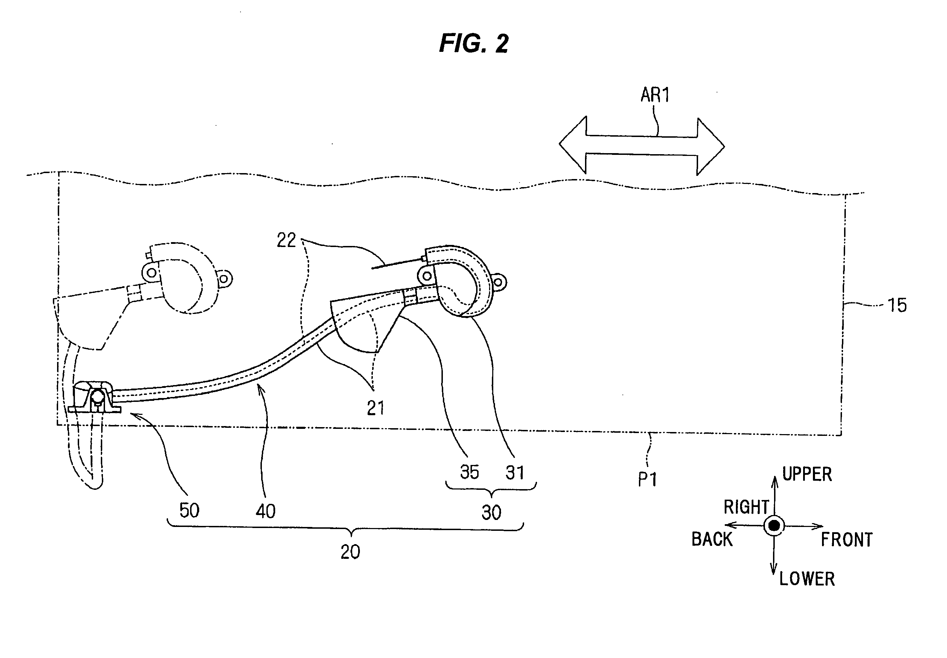

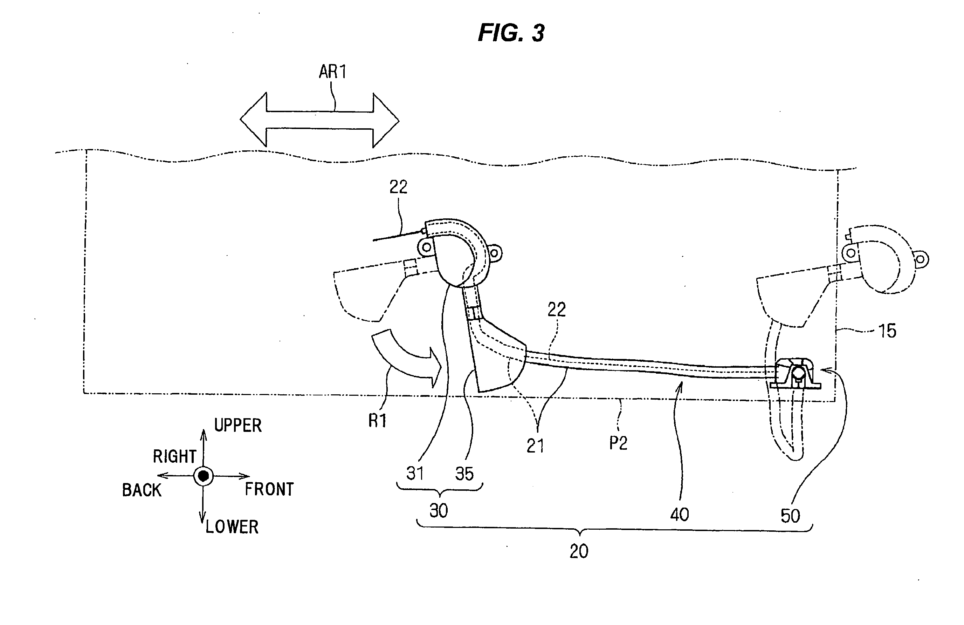

Figs. 2 and 3 are respectively views of an example of a feeding wire structure 20 for the slide door 14. The feeding wire structure 20 prevents an unreasonable load from being applied to a wire harness 22 without obstructing the forward/backward movements of the slide door main body 15. As shown in Figs. 2 and 3, the feeding wire structure 20 mainly includes a slide door side feeding apparatus 30, a transition portion 40 and a main body side feeding apparatus 50.

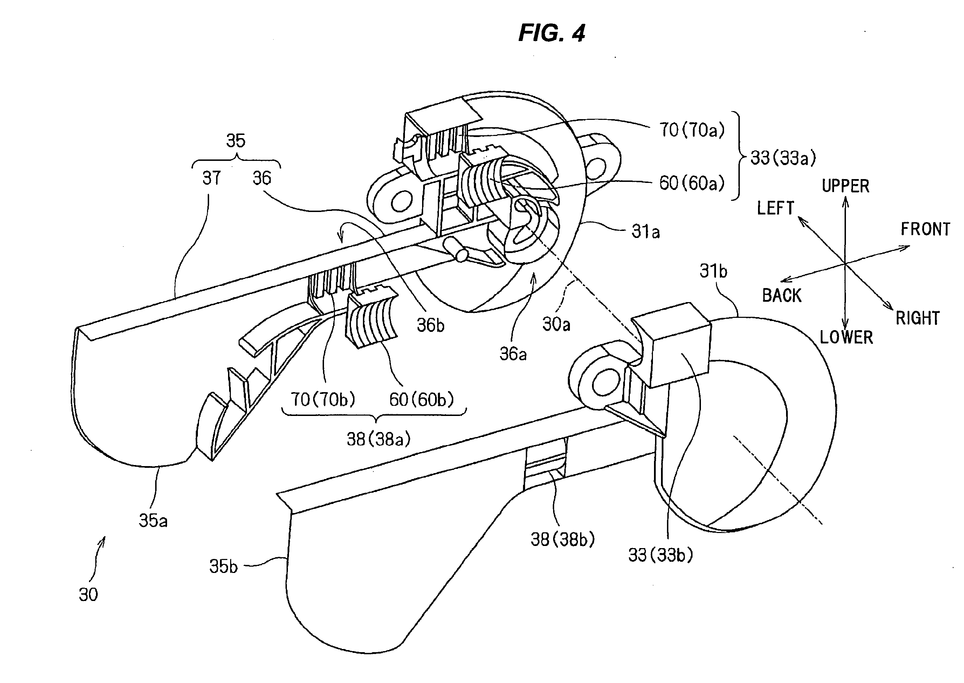

Fig. 4 is an exploded perspective view of an example of the structure of the slide door side feeding apparatus 30. As shown in Fig. 2 and 3, the slide door side feeding apparatus 30 is fixed to the interior of the slide door main body 15 and is used to feed electricity to electric parts (not shown) mounted on the slide door main body 15. As shown in Fig. 2 and 3, the slide door side feeding apparatus 30 mainly includes a wire protection tube 21, a wire harness 22, a base portion 31 and an oscillation portion 35.

The wire protection tube 21 is a substantially cylindrical-shaped elastic resin tube. As the wire protection tube 21, for example, there is used a corrugated tube. The wire harness 22 is constituted of multiple wires respectively to be arranged within the wire protection tube 21 and is used to connect together the car body 11 and slide door main body 15 electrically.

To assemble the base portion 31, left and right base portion composing members 31a and 31b may be combined together. As shown in Figs. 2 and 3, the base portion 31 is fixed to a desired position in the slide door main body 15.

Also, as shown in Fig. 4, the left and right base portion composing members 31a and 31b are arranged such that they sandwich the oscillation portion 35 between them from right and left sides. Therefore, the oscillation portion 35 can be oscillated about a rotation axis 30a with respect to the base portion 31.

A pair of fixing portions 33 (33a, 33b), as shown in Fig. 4, are respectively formed near the upper ends of the composing members 31a and 31b. To fix the wire protection tube 21 to the base portion 31, it may be sandwiched between the left and right fixing portions 33a and 33b. That is, the paired fixing portions 33 are used as a fixing structure for fixing the wire protection tube 21 to be arranged within the base portion 31. Here, the description of the specific structures of the fixing portions 33a and 33b will be given later.

To assemble the oscillation portion 35, left and right oscillation portion composing members 35a and 35b may be combined together. As shown in Fig. 4, the oscillation portion 35 mainly includes a tubular portion 36, an extended portion and a pair of fixing portions 38.

The tubular portion 36, as shown in Fig. 4, is a hollow member extending from its one end 36a existing on the rotation axis 30a side toward its other end 36b existing on the paired fixing portions 38 (38a and 38b) side. As shown in Figs. 2 and 3, the internal space of the tubular section 36 has substantially the same size as the outer size of the wire protection tube 21.

The paired fixing portions 38 (38a and 38b), as shown in Fig. 4, are respectively formed near the other end 36b of the tubular portion 36. When the wire protection tube 21 is sandwiched between the left and right fixing portions 38a and 38b, it can be fixed to the oscillation portion 35. That is, the paired fixing portions 38 are used as a fixing structure for fixing the wire protection tube 21 to be arranged within the oscillation portion 35. Here, the description of the specific structures of the fixing portions 38a and 38b will be given later.

With the forward and backward movements of the slide door 14, the extended portion 37 guides the compressible or expandable wire protection tube 21 between the slide door side feeding apparatus 30 and main body side feeding apparatus 50. As shown in Fig. 4, the width of the extended portion 37 will spread out in the direction of an arrow R1 as it goes outwardly of the oscillation portion 35. This can also prevent an unreasonable load from being applied to the wire protection tube 21 and wire harness 22.

Here, in this embodiment, the base portion 31 includes an energizing member (not shown) made of an elastic member such as a spring. As the oscillation portion 35 is oscillated in the arrow R1 direction when the slide door main body 15 is moved from its closed position P1 (see Fig. 2) to its opened position P2 (see Fig. 3) and the wire protection tube 21 is thereby pulled, the energizing member energizes the oscillation portion 35 in the opposite direction to the arrow R1 direction.

Therefore, when the slide door main body 15 moves from the opened portion P2 (see Fig. 3) toward the closed position P1 direction and thus the wire protection tube 21 is turned from its extended state to its compressed state, the oscillation portion 35 can be oscillated from a solid line position in Fig. 3 to a one-dot chained line position in Fig. 3.

The transition portion 40 is interposed between the car body 11 and slide door 14 and is used to connect together the slide door side feeding apparatus 30 and main body side feeding apparatus 50 electrically. In this embodiment, the transition portion 40, as shown in Figs. 2 and 3, is defined by the wire protection tube 21 and wire harness 22.

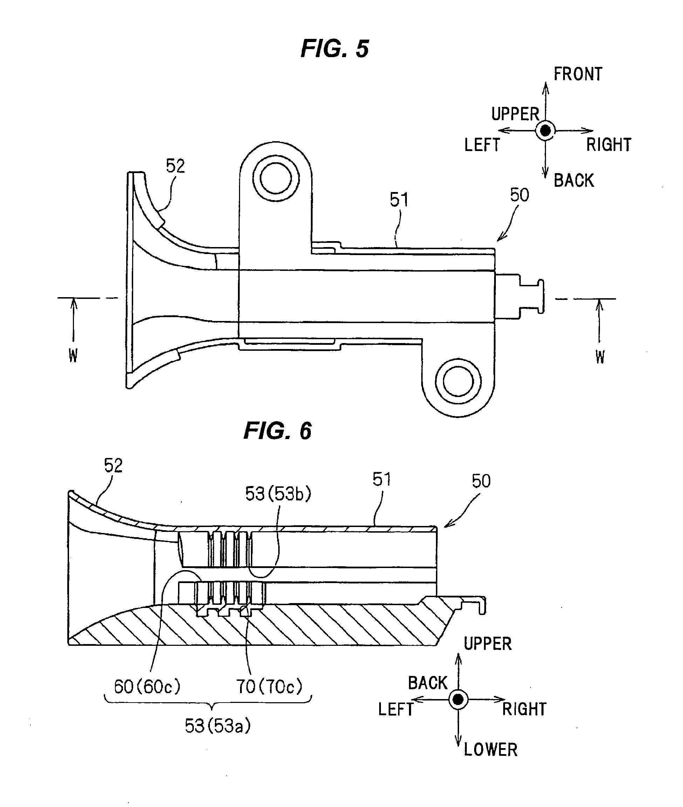

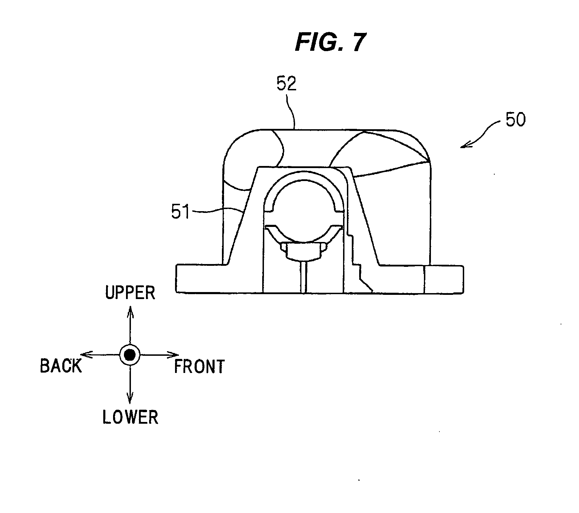

Figs. 5 to 7 are respectively plan view, back view and side view of an example of the structure of the main body side feeding apparatus 50. The main body side feeding apparatus 50 is fixed to the car body 11 and is used to feed electricity from the car body 11 side to the slide door main body 15 side. As shown in Figs. 5 to 7, the main body side feeding apparatus 50 mainly includes a tubular portion 51, an extended portion 52 and a pair of fixing portions 53.

The tubular portion 51 is a hollow portion which, as shown in Fig. 6, extends in the right and left direction substantially perpendicular to the forward/backward moving direction AR1 (the back and forth direction) of the slide door 14. As shown in Figs. 2 and 3, the internal space of the tubular portion 51, similarly to the tubular portion 36, has substantially the same size to the outer size of the wire protection tube 21.

The extended portion 52, similarly to the extended portion 37, guides the compressible or expandable wire protection tube 21 between the slide door side feeding apparatus 30 and main body side feeding apparatus 50. The width of the extended portion 52 increases as it goes in the left direction. This can prevent an unreasonable load from being applied to the wire protection tube 21 and wire harness 22.

The paired fixing portions 53 (53a and 53b), as shown in Fig. 6, are formed near the boundary between the tubular portion 51 and extended portion 52. When the wire protection tube 21 is sandwiched between the upper and lower fixing portions 53a and 53b, it is fixed to the main body side feeding apparatus 50. Thus, the paired fixing portions 53 are used as a fixing structure for fixing the wire protection tube 21 to be arranged within the main body side feeding apparatus 50. Here, the specific structures of the respective fixing portions 53a and 53b will be described later.

<3. Structure of Fixing Portion>

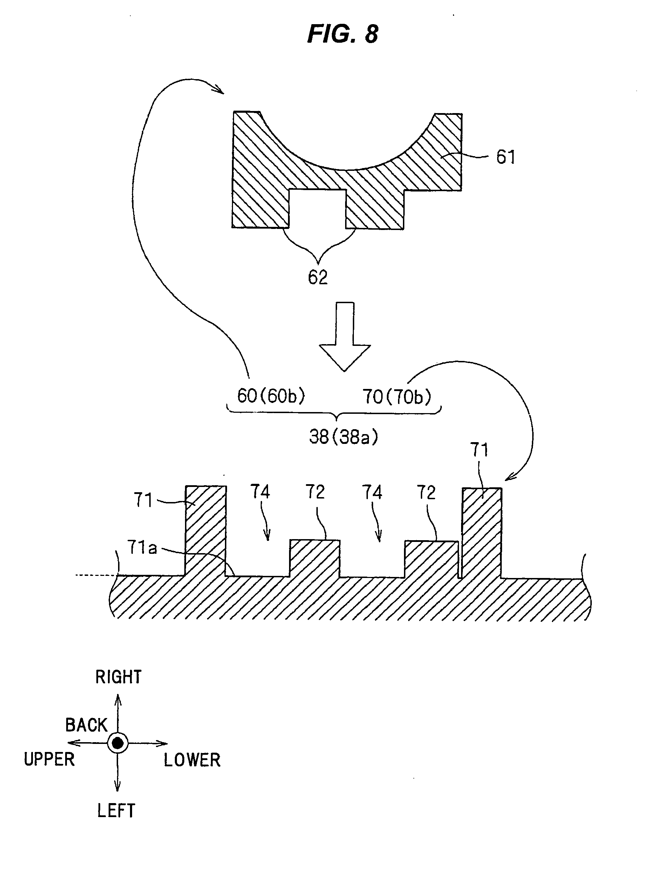

Fig. 8 shows an example of the structure of the fixing portion 38b. As shown in Figs. 4 and 8, the fixing portion 38a mainly includes a pair of blocks 60 and a pair of engaging portions 70 (a pair of holding portions). Here, the respective fixing portions 33a, 33b, 38a, 38b (see Fig. 4), 53a and 53b (see Fig. 6) are similar in structure. Therefore, the description thereof will be given below of the fixing portion 38b as a typical example.

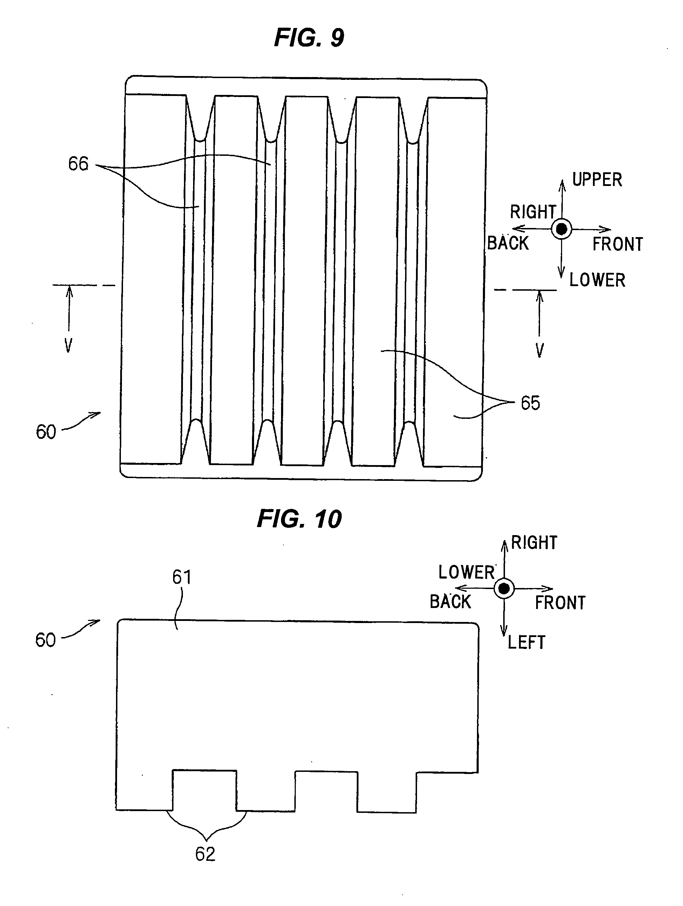

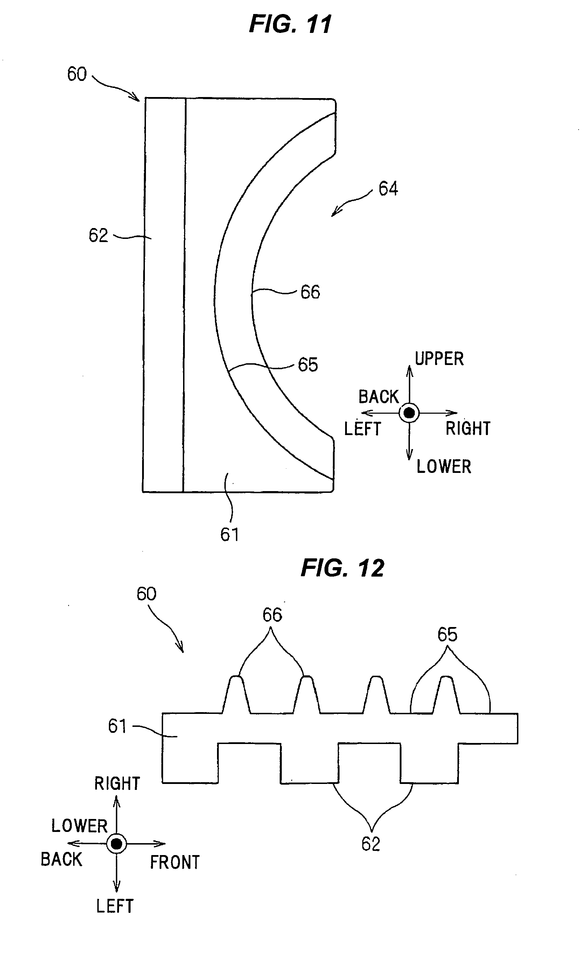

Figs. 9, 10 and 11 are respectively the side view, bottom view and back view of an example of the structure of the block 60 for fixing the wire protection tube 21. Also, Fig. 12 is a sectional bottom view taken along the V-V line shown in Fig. 9. As shown in Fig. 10, the paired blocks 60 each mainly includes a main body portion 61 and leg portions 62.

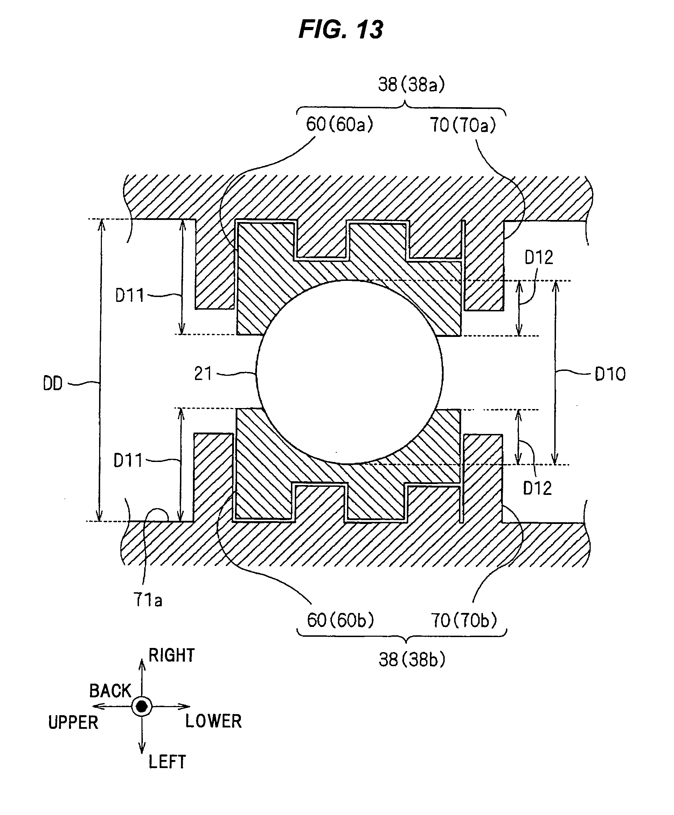

The multiple leg portions 62 each are projecting portions which, as shown in Figs. 10 to 12, project in the left direction from the left side surface of the main body portion 61. The leg portions 62 each, as shown in Fig. 11, extend along the vertical direction (second direction). Here, in Fig. 8 and in Figs. 13 to 16 which will be described later, the leg portions 62 each will be described such that they extend along the back and forth direction for convenience of explanation of the method for fixing the wire protection tube 21.

The main body portion 61, as shown in Fig. 10, is formed to have a substantially cuboid shape. Also, as shown in Fig. 11, the main body portion 61 includes a side surface having a groove 64 extending along the back and forth direction (first direction). That is, the groove 64 formed in this side surface is formed to have a substantially arc-like shape when viewed from behind. Further, as shown in Figs. 11 and 12, the main body portion 61 includes multiple projecting portions 66 which respectively project from the surface (arc surface) 65 of the groove 64 in the normal direction of the arc surface 65.

Referring back to Fig. 8, the engaging portion 70 is a holding portion for holding its corresponding block 60 removably. As shown in Fig. 8, the engaging portion 70 mainly includes a surrounding section 71 and a projecting section 72.

The surrounding section 71 is a frame member provided on the bottom surface 71a of the engaging portion 70. The inside size of the surrounding section 71 is substantially the same as the outer size of the block 60. Therefore, to hold the block 60, it may be disposed in a space surrounded by the surrounding section 71.

The multiple projecting sections 72 respectively project in the right direction from the bottom surface 71a. The projecting sections 72 are disposed correspondingly to the multiple leg portions 62 and extend along the vertical direction (second direction). Therefore, between the mutually adjoining projecting sections 72, or between the surrounding section 71 and projecting section, there is formed a recess 74 which extends in the vertical direction (second direction).

Here, in Fig. 8 and in Figs. 13 to 16 which will be described later, each projecting section 62 will be described such that, similarly to the leg portion 62, it extends along the back and forth direction for convenience of explanation of the method for fixing the wire protection tube 21.

Thus, to fix the wire protection tube 21 using the paired fixing portions 38b, the blocks 60 may be respectively held by their corresponding engaging portions 70 and the wire protection tube 21 may be sandwiched between the grooves 64 of the blocks 60 (especially, when a corrugated tube is used as the wire protection tube 21, ring-shaped projecting portions formed on the outer periphery of the corrugated tube may be engaged into their associated recesses respectively formed between the respective projections 66).

<4. Fixing Method using Fixing Portions>

Figs. 13 to 15 are views to explain an example of the method for fixing the wire protection tube 21 using the fixing portions 38b.

In Fig. 13, the leg portions 62 of the left and right blocks 60a and 60b are engaged into the recesses 74 of their corresponding engaging portions 70a and 70b. Therefore, where the distance between the engaging portions 70a and 70b (the distance between the bottom surfaces 71a) is expressed as DD, the height of the blocks 60a and 60b when viewed from the bottom surface 71a (the size in the right and left direction) is expressed as D11 and the depth of the grooves 64 formed in the blocks 60a and 60b (the size in the right and left direction) is expressed as D12, the diameter size D10 of the wire protection tube 21 to be fixed by the paired fixing portions 38a and 38b can be expressed as in the expression 1.

$$D10 = DD - 2 \times D11 + 2 \times D12 \quad \text{--- --- ---} \quad \text{Expression 1}$$

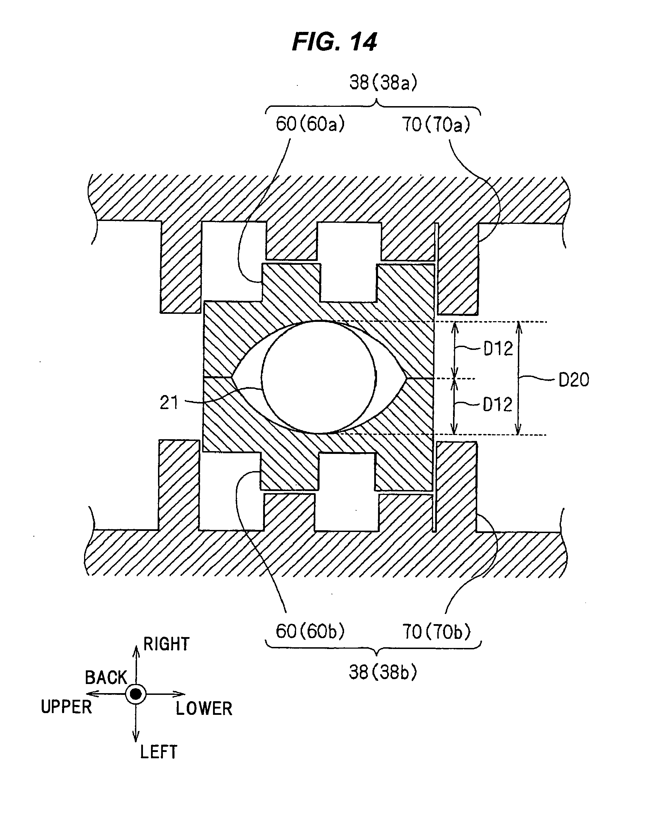

Also, in Fig. 14, the leg portions 62 of the left and right blocks 60a and 60b are made to face the projecting sections 72 of their corresponding engaging portions 70a and 70b. Therefore, when the blocks 60a and 60b are held as in Fig. 14, the diameter size D20 of the wire protection tube 21 to be fixed by the paired fixing portions 38a and 38b can be expressed as in the expression 2.

$$D20 = 2 \times D12 \quad \text{--- --- ---} \quad \text{Expression 2}$$

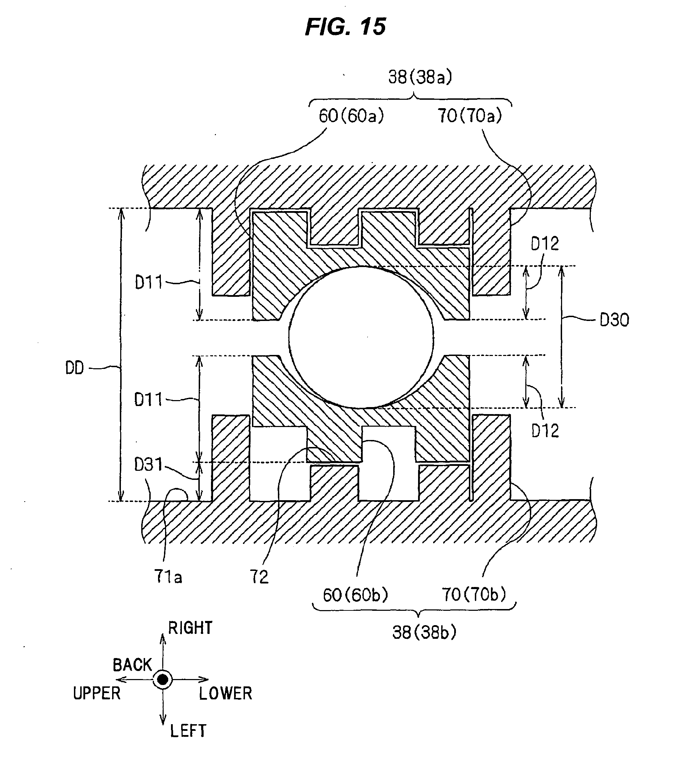

Further, in Fig. 15, the leg portions 62 of the blocks 60a are engaged into the recesses 74 of their corresponding engaging portions 70a, while the leg portions 62 of the blocks 60b are made to face the projecting sections of their corresponding engaging portions 70b. Therefore, when the height of the blocks 60a and 60b when viewed from the bottom surface 71a (the size in the right and left direction) is expressed as D31, the diameter size D30 of the wire protection tube 21 to be fixed by the paired fixing portions 38a and 38b can be expressed as in the expression 3.

$$D30 = DD - 2 \times D11 - D31 + 2 \times D12 \text{ --- Expression 3}$$

<5. Advantages of Fixing Portions in Embodiment of the Invention>

As described above, the pair of fixing portions 33, 38 or 53 in this embodiment can removably hold the blocks 60 using the corresponding engaging portions 70. Without changing the structure of the engaging portions 70, protection tubes of various sizes can be fixed simply by selecting such blocks 60 as correspond to the size (the size in the width direction) of the wire protection tube 21. This can reduce the manufacturing cost of the feeding apparatus capable of coping with the wire protection tubes 21 of various sizes.

Also, the pair of fixing portions 33, 38 or 53 in this embodiment can select various distances between the grooves 40 by selecting the position relationships between the blocks 60 and engaging portions 70. For example, in this embodiment, it is possible to select any one of the following states: that is, (1) : a state where the leg portions 62 of the left and right blocks 60a and 60b are engaged into the recesses 74 of their associated engaging portions 70a and 70b; (2): a state where the leg portions 62 of the left and right blocks 60a and 60b are made to face the projecting sections 72 of their associated engaging portions 70a and 70b; and, a state where the leg portions 62 of the blocks 60a are engaged into the recesses 74 of their corresponding engaging portions 70a, while the leg portions 62 of the blocks 60b are made to face the projecting sections of their corresponding engaging portions 70b.

That is, as the distance between the grooves 64, one of D10, D20 and D30 can be selected. Therefore, without replacing the pair of blocks 60, they can be made to correspond to the multiple wire protection tubes 21 of various sizes (width direction sizes). This can further reduce the manufacturing cost of the feeding apparatus capable of coping with the wire protection tubes 21 of various sizes.

<6. Modification>

Although description has been given heretofore of the embodiment of the invention, the invention is not limited to the above embodiment but other various modifications are also possible.

(1) In the embodiment, description has been given such that the wire protection tube 21 is a substantially cylindrical elastic resin tube and the surface of the groove 64 formed in each block 60 is a substantially arc surface. However, the shapes of the wire protection tube 21 and groove 64 are not limited to this. For example, as the wire protection tube 21, there may also be used a prismatic-shaped elastic resin tube and, in the block 60, there may also be formed a groove 64 having a substantially prismatic shape.

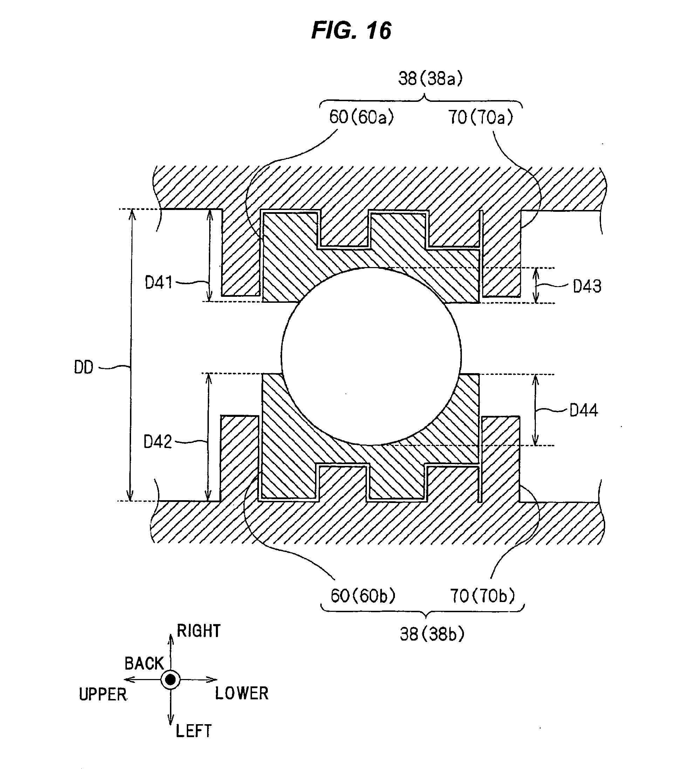

(2) Also, in the embodiment, description has been given such that the heights of the two blocks 60a and 60b are the same. However, this is not limitative. For example, as shown in Fig. 16, the heights of the two blocks 60a and 60b may also be different from each other. In this case, by selecting the position relationships between the blocks 60 and engaging portions 70, the pair of fixing portions 38a and 38b are able to fix the wire protection tubes 21 of a total of four kinds of diameter sizes.

DESCRIPTION OF REFERENCE NUMERALS AND SIGNS

1: Car
14: Slide door
15: Slide door main body
20: Feeding wire structure
21: Wire protection tube
22: Wire harness
30: Slide door side feeding apparatus
33 (33a, 33b), 38 (38a, 38b), 53 (53a, 53b): Fixing portion
40: Transition portion
50: Main body side feeding apparatus
53: Fixing portion
60 (60a ~ 60c): Block
61: Main body portion
62: Leg portion
64: Groove

65: Groove surface
65: Arc shape
66: Projection
70 (70a ~ 70c): Engaging portion
71: Surrounding section
71a: Bottom surface
72: Projecting section
74: Groove

**Claims**

1. A feeding apparatus comprising:

    (a) an elastic protection tube;
    (b) multiple wires to be arranged within the protection tube; and
    (c) a fixing structure for fixing the protection tube, wherein:

        the fixing structure includes:

            (c-1) a pair of blocks; and
            (c-2) a pair of holding portions;

    each of the pair of holding portions holds corresponding one of the blocks removably;
    each of the pair of blocks includes one side surface having a groove extending along a first direction; and
    the protection tube is fixed by the fixing structure when the respective blocks are held by their corresponding holding portions and the protection tube is sandwiched between the respective grooves.

2. The feeding apparatus as set forth in Claim 1, wherein:

    each of the pair of blocks includes multiple leg portions respectively extending along a second direction;
    each of the pair of holding portions includes multiple projecting portions disposed correspondingly to the multiple leg portions and extending along the second direction; and
    the pair of blocks is held by the pair of holding portions when (i) the leg portions are engaged into recesses existing between the mutually adjoining projecting portions, or when (ii) the respective leg portions are made to face their corresponding projecting portions.

3. The feeding apparatus as set forth in Claim 1 or 2, wherein
   the surface of the groove formed in the one side surface is a substantially arc-shaped surface capable of fixing the protection tube having a substantially cylindrical shape.

4. The feeding apparatus as set forth in Claim 1 or 2, wherein
   the shape of the groove formed in the one side surface is a substantially prismatic shape capable of fixing the protection tube having a substantially prismatic shape.

5. A fixing structure for fixing an elastic protection tube comprising:

    (a) a pair of blocks; and
    (b) a pair of holding portions, wherein:

        each of the pair of holding portions holds corresponding one of the blocks removably; and
        each of the pair of blocks includes one side surface having a groove extending along a first direction; and
        the protection tube can be fixed when the respective blocks are held by their corresponding holding portions and the protection tube is sandwiched between the respective grooves.

6. The fixing structure as set forth in Claim 5, wherein:

    each of the pair of blocks includes multiple leg portions respectively extending along a second direction;

each of the pair of holding portions includes multiple projecting portions disposed correspondingly to the multiple leg portions and extending along the second direction; and

the pair of blocks is held by the pair of holding portions when (i) the respective leg portions are engaged into recesses existing between the mutually adjoining projecting portions, or when (ii) the respective leg portions are made to face their corresponding projecting portions.

7.  The fixing structure as set forth in Claim 5 or 6, wherein
    the surface of the groove formed in the one side surface is a substantially arc-shaped surface capable of fixing the protection tube having a substantially cylindrical shape.

8.  The fixing structure as set forth in Claim 5 or 6, wherein
    the shape of the groove formed in the one side surface is a substantially prismatic shape capable of fixing the protection tube having a substantially prismatic shape.

FIG. 1

# FIG. 2

**FIG. 3**

EP 2 520 467 A1

FIG. 4

EP 2 520 467 A1

**FIG. 5**

**FIG. 6**

## FIG. 7

UPPER

BACK — FRONT

LOWER

## FIG. 8

## FIG. 9

66

60

65

UPPER

RIGHT
BACK ← ● → FRONT

LOWER

## FIG. 10

61

60

62

RIGHT
LOWER
BACK ← ● → FRONT

LEFT

## FIG. 11

## FIG. 12

# FIG. 13

## FIG. 14

# FIG. 15

# FIG. 16

<table>
<tr><td colspan="2"><strong>INTERNATIONAL SEARCH REPORT</strong></td><td>International application No.<br>PCT/JP2010/060270</td></tr>
</table>

| A. CLASSIFICATION OF SUBJECT MATTER |
|---|
| *B60R16/02*(2006.01)i, *H02G3/30*(2006.01)i, *H02G11/00*(2006.01)i |

According to International Patent Classification (IPC) or to both national classification and IPC

| B. FIELDS SEARCHED |
|---|
| Minimum documentation searched (classification system followed by classification symbols)<br>B60R16/02, H02G3/30, H02G11/00 |

Documentation searched other than minimum documentation to the extent that such documents are included in the fields searched

| Jitsuyo Shinan Koho | 1922-1996 | Jitsuyo Shinan Toroku Koho | 1996-2010 |
|---|---|---|---|
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2003-148656 A  (Yazaki Corp.),<br>21 May 2003 (21.05.2003),<br>entire text; all drawings<br>& US 2003/0102142 A1    & EP 1312845 A1 | 1,3,5,7<br>4,8<br>2,6 |
| Y<br>A | JP 10-215514 A  (UC Industiral Co., Ltd.),<br>11 August 1998 (11.08.1998),<br>entire text; all drawings<br>(Family: none) | 4,8<br>2,6 |
| A | JP 2009-213249 A  (Toyota Motor Corp.),<br>17 September 2009 (17.09.2009),<br>entire text; all drawings<br>(Family: none) | 2,6 |

☐ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>03 August, 2010 (03.08.10) | Date of mailing of the international search report<br>17 August, 2010 (17.08.10) |
|---|---|
| Name and mailing address of the ISA/<br>Japanese Patent Office | Authorized officer |
| Facsimile No. | Telephone No. |

Form PCT/ISA/210 (second sheet) (July 2009)

| **INTERNATIONAL SEARCH REPORT** | International application No. |
|---|---|
| | PCT/JP2010/060270 |

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
      All features of the invention in claim 1 are publicly known as described in the document 1 (JP 2003-148656 A). Therefore, the invention in claim 1 and the invention in claims 2 - 8 cannot be considered to have a technical relationship represented by mutually same or corresponding special technical feature.
      Consequently, the invention in claim 1 and the invention in claims 2 - 8 cannot be deemed to be a group of inventions which are so linked as to form a single general inventive concept.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001224118 A
- JP 2002199558 A